(19) Europäisches Patentamt
European Patent Office
Office européen des brevets

(11) **EP 2 170 637 B1**

(12) **FASCICULE DE BREVET EUROPEEN**

(45) Date de publication et mention
de la délivrance du brevet:
**30.01.2013 Bulletin 2013/05**

(21) Numéro de dépôt: **08805962.1**

(22) Date de dépôt: **09.06.2008**

(51) Int Cl.:
***B60G 21/05*** *(2006.01)*

(86) Numéro de dépôt international:
**PCT/FR2008/051027**

(87) Numéro de publication internationale:
**WO 2009/013417 (29.01.2009 Gazette 2009/05)**

(54) **ESSIEU-ARRIERE DE VEHICULE AUTOMOBILE DE STRUCTURE EN H AYANT UNE TRAVERSE A PROFIL FERME**

HINTERACHSE FÜR EIN AUTOMOBIL MIT EINER H-STRUKTUR MIT EINER QUERSTREBE MIT GESCHLOSSENEM PROFIL

REAR AXLE FOR AUTOMOBILE HAVING AN H STRUCTURE WITH A CLOSED PROFILE CROSSBAR

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.07.2007 FR 0705338**

(43) Date de publication de la demande:
**07.04.2010 Bulletin 2010/14**

(73) Titulaire: **Renault S.A.S.**
**92100 Boulogne-Billancourt (FR)**

(72) Inventeurs:
• **BAGGIO, Paul**
**F-72000 Le Mans (FR)**
• **BIEN, Cedric**
**F-72000 Le Mans (FR)**
• **RICHARD, Laurent**
**F-72250 Parigne L'Eveque (FR)**

(56) Documents cités:
EP-A- 0 960 753          DE-A1- 4 330 192
DE-A1- 19 933 108          FR-A- 2 805 479
US-A1- 2002 117 890          US-A1- 2004 256 828
US-A1- 2006 059 974

**Description**

La présente invention concerne un essieu arrière de véhicule automobile, constitué de deux bras longitudinaux et d'une traverse à profil fermé déformable en torsion.

L'ensemble de ces pièces forment un H et permet de relier efficacement et à faible coût les roues arrière à la caisse du véhicule automobile.

Afin d'optimiser la géométrie de l'essieu ainsi que la réalisation de la traverse, cette dernière peut être issue du formage d'un tube à section circulaire en vue de former une poutre de section fermée en V dont la section centrale est décalée de la section aux extrémités et dont les extrémités de forme oblongues sont raccordées au bras.

Ce type de traverse permet d'optimiser le fonctionnement de l'essieu du point de vue dynamique automobile tout en facilitant sa réalisation technique.

Cependant, ce type de traverse, et en particulier le décalage angulaire entre la section centrale et les sections des extrémités, introduit un niveau de contraintes élevées dans la zone de transition.

Cette zone est d'autant plus sollicitée qu'elle se trouve à proximité de la zone de fixation de la traverse aux bras longitudinaux.

Il existe donc un besoin d'optimiser la zone de transition ci-dessus en vue de minimiser les contraintes présentes dans cette zone et par là même de faciliter la mise en oeuvre de ce type de traverse.

On connaît différents procédés techniques décrivant la jonction des deux bras longitudinaux rigides par une traverse de section circulaire ou oblongue et dont une partie de la zone centrale est emboutie de façon à former une section fermée en forme de V.

Ces procédés offrent l'avantage de réaliser de façon simple des essieux dont la raideur de torsion peut être plus élevée sans ajouter de pièces supplémentaires et sans complexifier la jonction aux bras longitudinaux.

D'autre part, on connaît par le brevet DE 199 33 108 A1 un essieu dont la réalisation est faîte à l'aide d'une traverse à profil fermé dont la section centrale est en forme de V et décalé d'un angle de telle sorte que le centre de torsion virtuel est remonté vers le haut de l'essieu.

Il est également connu, par le document US 2004/0256828, une traverse de section oblongue et dont une partie de la zone centrale est emboutie de façon à former une section fermée en forme de V. Toutefois l'emboutissage est réalisé perpendiculairement au grand axe de la section oblongue, ce qui fragilise les zones de passage entre la section oblongue et la section en V.

Par ailleurs, il est à noter que l'on ne trouve pas de description précise de la zone dans laquelle la traverse effectue progressivement une rotation entre l'orientation de la section coté bras et celle située en son centre.

Cette zone est appelée par la suite « zone de transition ».

Cette zone est pourtant primordiale pour la tenue en fatigue de la traverse lors d'une sollicitation en torsion.

De plus, une bonne maîtrise de cette zone conditionne le respect de la section centrale, ce qui a une influence directe sur l'atteinte des prestations de l'essieu.

De part les premières réalisations de traverse à profil fermé, il est possible de voir une mise en application de la rotation vers le haut de la section centrale mais sur des traverses à profil d'origine circulaire. En effet, de part sa symétrie, le profil circulaire n'induit pas de contrainte particulière.

En revanche, il est beaucoup plus difficile d'obtenir un bon résultat sur une traverse dont les sections d'extrémités sont oblongues. Or ce type de profil offre une meilleure capacité de liaison, en particulier par soudage simple, avec les bras de l'essieu.

Le but de la présente invention est d'apporter des perfectionnements aux réalisations connues en proposant une traverse permettant notamment une meilleure répartition des contraintes lors de la sollicitation en torsion de l'essieu permettant ainsi une meilleure résistance à la fatigue de la traverse.

Ce but est atteint grâce à un essieu-arrière de véhicule automobile comprenant deux bras longitudinaux reliés entre eux par une traverse obtenue par formage d'un tube métallique, cette traverse présentant dans la zone de son raccordement avec chacun des bras longitudinaux une section transversale oblongue et dans une zone comprise entre cette zone de raccordement et le milieu de la traverse une partie emboutie présentant une section transversale qui évolue progressivement vers une section en V, caractérisé en ce qu'entre ladite zone de raccordement et ladite zone dans laquelle la section évolue progressivement vers une section en V existe une zone de transition dans laquelle la section de la traverse présente une partie en forme de triangle isocèle à sommet arrondi, la base de ce triangle étant raccordée à une partie de forme parabolique.

Selon une version préférée de l'invention, la partie en forme de triangle isocèle est située à l'arrière de la traverse, la partie de forme parabolique étant située à l'avant de la traverse.

De préférence également lesdites parties en forme de triangle isocèle et de forme parabolique sont symétriques par rapport à une droite QQ' formant un angle aigu $\alpha$ avec l'horizontale X-X', cette droite étant inclinée vers le bas à partir du sommet du triangle isocèle.

Avantageusement, ladite zone de transition est située à une distance de la zone de raccordement correspondant à 20% environ de la longueur de la demi-traverse.

Selon une particularité préférée de l'invention, dans la zone dans laquelle la section évolue progressivement vers une section en V, la forme de ladite partie en forme de triangle isocèle est conservée, tandis que la partie en forme de parabole est déformée pour évoluer progressivement vers un V rentrant à l'intérieur de la partie en forme de triangle isocèle.

De préférence également, la symétrie des deux parties de la section est conservée par rapport à la droite QQ' formant un angle aigu α par rapport à l'horizontale X-X'.

D'autres particularités et avantages de l'invention apparaîtront encore tout au long de la description ci-après.

Aux dessins annexés, donnés à titre d'exemples, non limitatifs :

- la figure 1 est une vue en perspective d'un demi-essieu arrière de véhicule automobile selon l'invention,
- la figure 2 est une vue en plan d'une demi-traverse de l'essieu arrière selon l'invention,
- la figure 3 est une vue en coupe suivant le plan F-F de la figure 2,
- la figure 4 est une vue en coupe suivant le plan E-E de la figure 2,
- la figure 5 est une vue en coupe suivant le plan D-D de la figure 2,
- la figure 6 est une vue en coupe suivant le plan C-C de la figure 2,
- la figure 7 est une vue en coupe suivant le plan B-B de la figure 2,
- la figure 8 est une vue en coupe suivant le plan A-A de la figure 2,
- la figure 9 est une vue de dessus d'une demi-traverse selon l'invention.

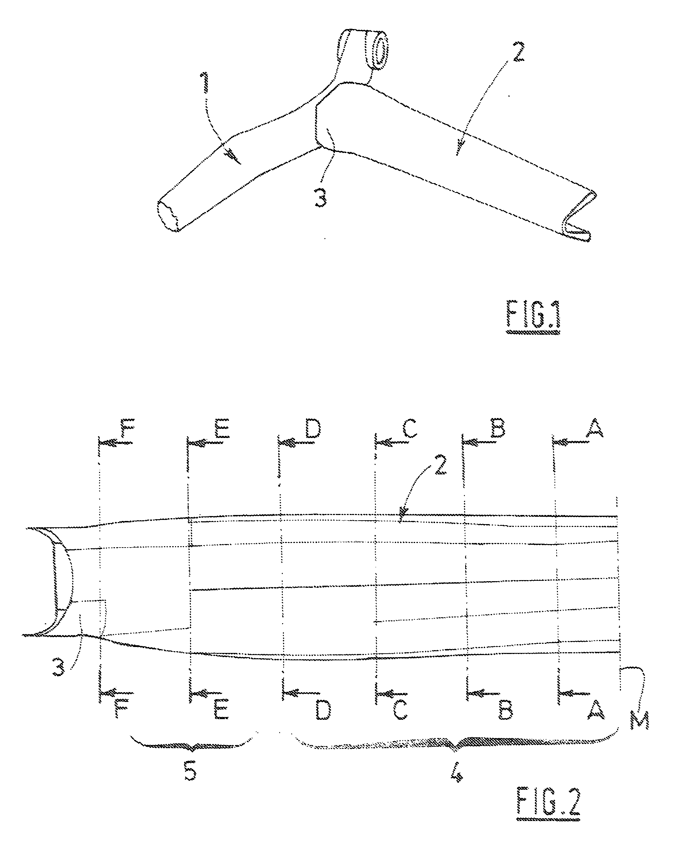

La figure 1 représente un demi-essieu arrière de véhicule automobile comprenant un bras longitudinal 1 relié à l'autre bras longitudinal par une traverse 2 obtenue par formage d'un tube en acier.

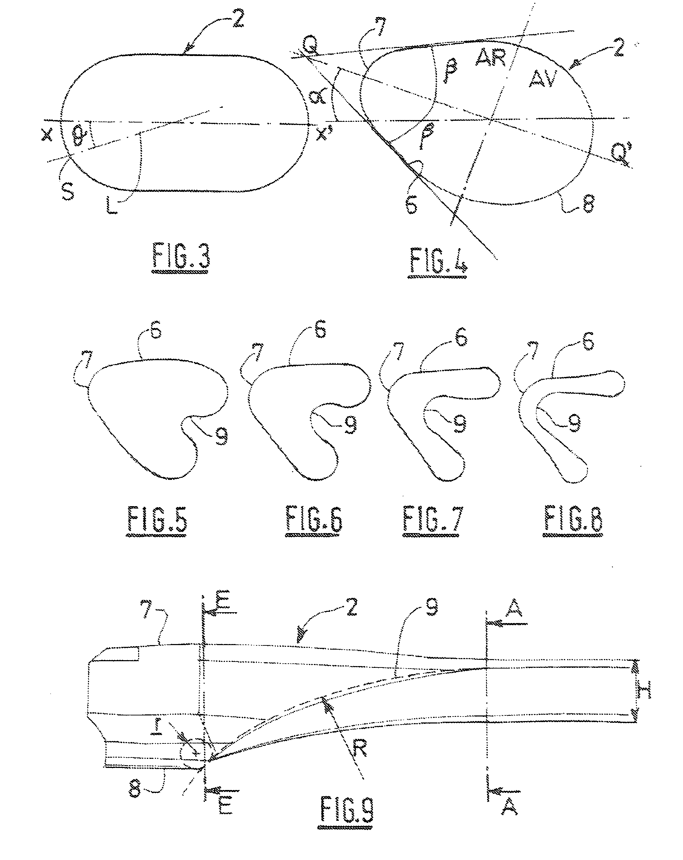

Cette traverse 2 présente (voir figure 2) dans la zone 3 de son raccordement par soudage avec le bras longitudinal 1 une section transversale oblongue (voir figure 3) et dans une zone 4 comprise entre cette zone de raccordement 1 et le milieu M de la traverse une partie emboutie présentant une section transversale qui évolue (voir figures 5 à 8) progressivement vers une section en V.

Conformément à l'invention, entre la zone 3 de raccordement et la zone 4 dans laquelle la section évolue progressivement vers une section en V existe une zone 5 de transition dans laquelle la section de la traverse 2 présente (voir figure 4) une partie 6 en forme de triangle isocèle à sommet arrondi 7, la base de ce triangle étant raccordée à une partie 8 de forme parabolique.

Selon une version préférée de l'invention, la partie 6 en forme de triangle isocèle est située à l'arrière de la traverse 2, la partie 8 de forme parabolique étant située à l'avant de la traverse.

La figure 4 montre que les parties en forme de triangle isocèle 6 et de forme parabolique 8 sont symétriques par rapport à une droite QQ' formant un angle aigu (α) avec l'horizontale X-X'.

Cette droite QQ' est inclinée vers le bas à partir du sommet du triangle isocèle 7.

La zone de transition 5 ci-dessus est située à une distance de la zone de raccordement 3 correspondant à 20% environ de la longueur de la demi-traverse 2.

On voit sur les figures 5 à 8 que dans la zone 4 (voir figure 2) dans laquelle la section évolue progressivement vers une section en V, la forme de la partie 6 en forme de triangle isocèle est conservée (l'angle β représenté sur la figure 4 ne change pas), tandis que la partie 8 en forme de parabole est déformée pour évoluer progressivement vers un V rentrant profondément à l'intérieur de la partie 6 en forme de triangle isocèle.

Par ailleurs, la symétrie des deux parties 6 et 8 de la section est conservée par rapport à la droite QQ' formant un angle aigu (α) par rapport à l'horizontale X-X'.

Selon une autre particularité importante, le fond 9 du V rentrant à l'intérieur de la partie 6 en forme de triangle isocèle est situé à une distance du sommet arrondi 7 de la partie en forme de triangle isocèle qui évolue en suivant la courbure d'un cercle de rayon R, comme indiqué sur la figure 9.

De préférence, le rayon R est compris entre 1,6 et 2,6 fois la hauteur H de la section centrale de la traverse.

De préférence également, le rayon R du cercle ci-dessus doit satisfaire en outre la relation suivante.

$$10r < R < 20r$$

r étant le rayon de courbure du sommet arrondi de la partie parabolique 8.

Les dispositions ci-dessus contribuent à répartir les contraintes selon l'axe transversal de la traverse.

Lorsque la traverse 2 est réalisée à partir d'une plaque roulée et soudée, la soudure S est de préférence située (voir figure 3) sur la partie arrière de la traverse et sur une droite L passant par le centre de la section oblongue qui est inclinée vers le bas suivant un angle (θ) de 10° ± 5° par rapport au grand axe X-X' de la section oblongue.

Cette disposition permet également d'améliorer la résistance aux efforts de la traverse.

Le premier avantage de l'invention que l'on vient de décrire est d'avoir réalisé une zone de transition permettant une meilleure répartition des contraintes lors de la sollicitation en torsion de l'essieu permettant ainsi une meilleure résistance à la fatigue de la traverse.

Le second avantage est de permettre un procédé de réalisation simplifié optimisant la rotation progressive de la section afin de proposer une orientation de la section centrale différente de l'orientation initiale de la traverse.

Le troisième avantage est donc de permettre de conserver un assemblage aisé entre une traverse à profil fermé et les bras longitudinaux rigides tout en bénéficiant de l'augmentation de raideur permise par le profil fermé et l'augmentation en hauteur de l'axe virtuel de rotation.

## Revendications

1. Essieu-arrière de véhicule automobile comprenant deux bras longitudinaux (1) reliés entre eux par une traverse (2) obtenue par formage d'un tube métallique, cette traverse (2) présentant dans la zone (3) de son raccordement avec chacun des bras longitudinaux (1), une section transversale oblongue et dans une zone (4) comprise entre cette zone (3) de raccordement et le milieu de la traverse une partie emboutie présentant une section transversale qui évolue progressivement vers une section en V, **caractérisé en ce qu'**entre ladite zone (3) de raccordement et ladite zone (4) dans laquelle la section évolue progressivement vers une section en V existe une zone (5) de transition dans laquelle la section de la traverse présente une partie (6) en forme de triangle isocèle à sommet arrondi (7), la base de ce triangle étant raccordée à une partie (8) de forme parabolique, dont la concavité fait face à la concavité de la partie en forme de triangle isocèle.

2. Essieu-arrière selon la revendication 1, **caractérisé en ce que** la partie (6) en forme de triangle isocèle est située à l'arrière de la traverse (2), la partie (8) de forme parabolique étant située à l'avant de la traverse.

3. Essieu-arrière selon l'une des revendications 1 ou 2, **caractérisé en ce que** lesdites parties (6, 8) en forme de triangle isocèle et de forme parabolique sont symétriques par rapport à une droite (QQ') formant un angle aigu ($\alpha$) avec l'horizontale (X-X'), cette droite étant inclinée vers le bas à partir du sommet du triangle isocèle.

4. Essieu-arrière selon la revendication 3, **caractérisé en ce que** ladite zone (5) de transition est située à une distance de la zone (3) de raccordement correspondant à 20% environ de la longueur de la demi-traverse.

5. Essieu-arrière selon l'une des revendications 3 ou 4, **caractérisé en ce que** dans la zone (4) dans laquelle la section évolue progressivement vers une section en V, la forme de ladite partie (6) en , forme de triangle isocèle est conservée, tandis que la partie (8) en forme de parabole est déformée pour évoluer progressivement vers un V rentrant à l'intérieur de la partie (6) en forme de triangle isocèle.

6. Essieu-arrière selon la revendication 5, **caractérisé en ce que** la symétrie des deux parties (6, 8) de la section est conservée par rapport à la droite (QQ') formant un angle aigu ($\alpha$) par rapport à l'horizontale (X-X').

## Claims

1. Rear axle of a motor vehicle comprising two longitudinal arms (1) connected together by a crossbar (2) obtained by forming of a metal tube, this crossbar (2) having, in the zone (3) of its connection with each of the longitudinal arms (1), an oblong cross section and, in a zone (4) included between this zone (3) of connection and the middle of the crossbar, a stamped portion having a cross section which tapers progressively towards a V section, **characterized in that**, between the said zone (3) of connection and the said zone (4) in which the section tapers progressively to a V section, there is a zone (5) of transition in which the section of the cross bar has a portion (6) in the shape of an isosceles triangle with a rounded apex (7), the base of this triangle being connected to a portion (8) of parabolic shape, of which the concavity faces the concavity of the portion in the shape of an isosceles triangle.

2. Rear axle according to Claim 1, **characterized in that** the portion (6) in the shape of an isosceles triangle is situated behind the crossbar (2), the portion (8) of parabolic shape being situated in front of the crossbar.

3. Rear axle according to one of Claims 1 and 2, **characterized in that** the said portions (6, 8) in the shape of an isosceles triangle and of parabolic shape are symmetrical relative to a straight line (QQ') forming an acute angle ($\alpha$) with the horizontal (X-X'), this straight line being inclined downwards from the apex of the isosceles triangle.

4. Rear axle according to Claim 3, **characterized in that** the said zone (5) of transition is situated at a distance from the zone (3) of connection corresponding to approximately 20% of the length of the half-crossbar.

5. Rear axle according to one of Claims 3 and 4, **characterized in that**, in the zone (4) in which the section tapers progressively to a V section, the shape of the said portion (6) in the shape of an isosceles triangle is retained, while the portion (8) in parabolic shape is deformed to taper progressively to a V re-entering the portion (6) in the shape of an isosceles triangle.

6. Rear axle according to Claim 5, **characterized in that** the symmetry of the two portions (6, 8) of the section is retained relative to the straight line (QQ') forming an acute angle ($\alpha$) relative to the horizontal (X-X') .

**Patentansprüche**

1.  Hinterachse eines Kraftfahrzeugs, die zwei Längsarme (1) enthält, welche durch einen Querträger (2) miteinander verbunden sind, der durch Formen eines Metallrohrs erhalten wird, wobei dieser Querträger (2) im Bereich (3) seiner Verbindung mit jedem der Längsarme (1) einen länglichen Querschnitt, und in einem Bereich (4) zwischen diesem Verbindungsbereich (3) und der Mitte des Querträgers einen tiefgezogenen Teil aufweist, der einen Querschnitt hat, welcher sich progressiv zu einem V-förmigen Querschnitt entwickelt, **dadurch gekennzeichnet, dass** es zwischen dem Verbindungsbereich (3) und dem Bereich (4), in dem sich der Querschnitt progressiv zu einem V-förmigen Querschnitt entwickelt, einen Übergangsbereich (5) gibt, in dem der Querschnitt des Querträgers einen Teil (6) in Form eines gleichschenkligen Dreiecks mit abgerundetem Scheitel (7) aufweist, wobei die Basis dieses Dreiecks mit einem Teil (8) von parabolischer Form verbunden ist, dessen Konkavität der Konkavität des Teils in Form eines gleichschenkligen Dreiecks gegenüberliegt.

2.  Hinterachse nach Anspruch 1, **dadurch gekennzeichnet, dass** der Teil (6) in Form eines gleichschenkligen Dreiecks sich im hinteren Teil des Querträgers (2) befindet, während der Teil (8) von parabolischer Form sich im vorderen Teil des Querträgers befindet.

3.  Hinterachse nach einem der Ansprüche 1 oder 2, **dadurch gekennzeichnet, dass** die Teile (6, 8) in Form eines gleichschenkligen Dreiecks und von parabolischer Form bezüglich einer Geraden (QQ') symmetrisch sind, die mit der Waagrechten (X-X') einen spitzen Winkel ($\alpha$) bildet, wobei diese Gerade ausgehend vom Scheitel des gleichschenkligen Dreiecks nach unten geneigt ist.

4.  Hinterachse nach Anspruch 3, **dadurch gekennzeichnet, dass** der Übergangsbereich (5) sich in einem Abstand zum Verbindungsbereich (3) befindet, der etwa 20% der Länge des halben Querträgers entspricht.

5.  Hinterachse nach einem der Ansprüche 3 oder 4, **dadurch gekennzeichnet, dass** in dem Bereich (4), in dem sich der Querschnitt progressiv zu einem V-förmigen Querschnitt entwickelt, die Form des Teils (6) in Form eines gleichschenkligen Dreiecks beibehalten wird, während der parabolförmige Teil (8) verformt wird, um sich progressiv zu einem ins Innere des Teils (6) in Form eines gleichschenkligen Dreiecks einspringenden V zu entwikkeln.

6.  Hinterachse nach Anspruch 5, **dadurch gekennzeichnet, dass** die Symmetrie der zwei Teile (6, 8) des Querschnitts bezüglich der Geraden (QQ') beibehalten wird, die einen spitzen Winkel ($\alpha$) bezüglich der Waagrechten (X-X') bildet.

FIG.1

FIG.2

FIG.3

FIG.4

FIG.5

FIG.6

FIG.7

FIG.8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- DE 19933108 A1
- US 20040256828 A